**Europäisches Patentamt**

**European Patent Office**

**Office européen des brevets**

(19)

(11) Numéro de publication: **0 167 083**
**B1**

(12) **FASCICULE DE BREVET EUROPEEN**

(45) Date de publication du fascicule du brevet:
**05.10.88**

(51) Int. Cl.⁴: **H 01 B 12/00, H 01 B 13/02**

(21) Numéro de dépôt: **85107799.0**

(22) Date de dépôt: **25.06.85**

(54) **Procédé et dispositif de torsadage de brins multifilamentaires supraconducteurs.**

(30) Priorité: **28.06.84 FR 8410220**

(43) Date de publication de la demande:
**08.01.86 Bulletin 86/2**

(45) Mention de la délivrance du brevet:
**05.10.88 Bulletin 88/40**

(84) Etats contractants désignés:
**AT BE CH DE FR GB IT LI NL SE**

(56) Documents cités:
**DE - A - 2 035 654**
**FR - A - 1 578 936**
**FR - A - 2 334 182**

(73) Titulaire: **ALSTHOM, 38, avenue Kléber, F-75784 Paris Cédex 16 (FR)**

(72) Inventeur: **Dubots, Patrick, 1 Chemin de Gaillarbois, F-78640 Neauphle Le Chateau (FR)**
Inventeur: **Kermarrec, Jean-Claude, 73bis rue Lavoisier, F-78140 Velizy Villacoublay (FR)**
Inventeur: **Tavergnier, Jean-Pierre, 1bis rue Fromagère Linas, F-91310 Montlhery (FR)**

(74) Mandataire: **Weinmiller, Jürgen et al, Lennéstrasse 9 Postfach 24, D-8133 Feldafing (DE)**

## Description

La présente invention concerne un procédé de torsadage de brins multifilamentaires supraconducteurs de diamètre inférieur à 1 mm, susceptibles de fonctionner en régime alternatif. Elle s'étend en outre à un dispositif de mise en œuvre de ce procédé.

Pour réduire au maximum les pertes thermomagnétiques dans des enroulements supraconducteurs formés à partir de tels brins, on sait qu'il convient de diminuer le diamètre des filaments de ces brins pour réduire les pertes hystéritiques, d'augmenter la résistance électrique transverse et de réduire le pas de torsadage, ce qui limite les pertes par courants induits. On avait toutefois constaté que l'on ne pouvait réduire le pas relatif de torsadage (rapport du pas au diamètre de brin) à des valeurs inférieures à 7, sous peine d'une dégradation importante de la densité de courant critique. Mais les pertes par courants induits, qui sont proportionnelles au carré du pas, restent encore élevées pour des pas relatifs de 7.

La présente invention a pour but de procurer des brins de pas relatif de torsadage notablement inférieur à 7, et pouvant atteindre jusqu'à 3, sans cependant présenter une densité de courant critique notablement inférieure à celle du brin non torsadé.

Le procédé selon l'invention est caractérisé en ce que l'on torsade les brins à un pas compris entre 7 et 3 diamètres, à une température d'au moins 200°C et à une vitesse entre 30 et 5000 tours/min.

On effectue de préférence le chauffage du brin au cours du torsadage par circulation à son contact d'un courant de gaz non réactif sur le filament. Lorsque le brin est à base d'un alliage niobium-titane, on effectue le torsadage à une température entre 200° et 500°C, et notamment de 250°C environ pour un diamètre de brin de 0,12 mm.

Le dispositif de torsadage selon l'invention, comprenant une bobine débitrice du brin à torsader, une bobine réceptrice du brin torsadé, des moyens pour faire tourner la bobine débitrice autour d'un axe perpendiculaire à son axe propre, formant axe d'avance du brin, et des moyens pour tirer le brin selon cet axe d'avance, et en outre un tube de guidage du brin sortant de la bobine débitrice caractérisé par des moyens pour mettre en circulation dans ce tube un courant de gaz chaud non réactif sur le brin.

On a observé en outre que l'on pouvait dans le domaine de l'invention compenser les facteurs vitesses d'avance et température du brin, une température relativement peu élevée du brin pouvant être compensée par une vitesse d'avance plus faible, les vitesses d'avance très faibles ne présentant cependant naturellement pas d'intérêt industriel.

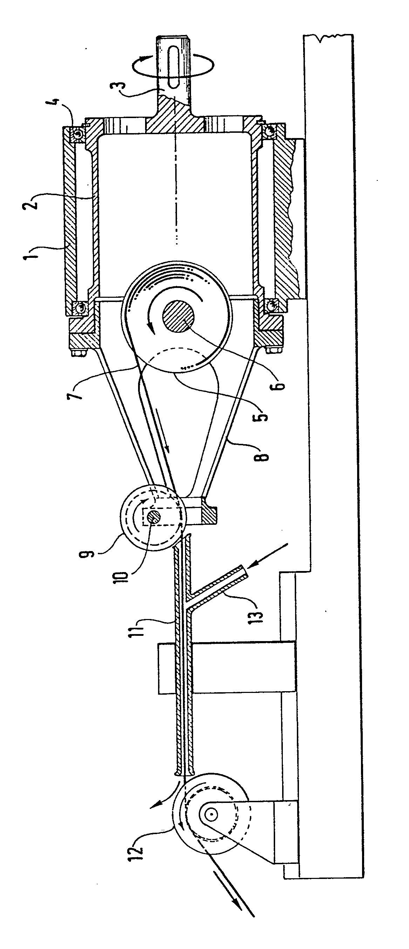

Il est décrit dans la figure unique du dessin une machine de torsadage de brins à base de niobium-titane de 0,12 mm de diamètre.

La machine comprend un bâti métallique 1 entourant un corps cylindrique rotatif 2 d'axe 3, entraîné en rotation par un moteur à variateur de vitesse (non représenté) et pouvant tourner à 3000 tours/min sur des roulements à billes 4. La bobine débitrice 5 d'axe 6 perpendiculaire au plan de la figure, débite le brin 7 à une vitesse d'avance de 2 m/min. à l'intérieur du cône de guidage 8, son freinage étant assuré par un joint torique interne. A la sortie du cône de guidage, le brin fait une boucle sur la bobine 9 d'axe 10 perpendiculaire au plan de la figure.

Le brin se déroulant de la bobine 9 passe dans le tube cylindrique 11 de faible diamètre en silice ou en alumine, disposé entre la bobine 9 et une bobine de blocage de la rotation 12, sur laquelle le brin torsadé fait quelques boucles. Le torsadage s'effectue à l'intérieur du tube 11 entre les bobines 9 et 12.

Le tube 11 comporte au voisinage de son extrémité d'entrée du brin une tubulure 13 d'admission d'un courant d'azote à 250°C, qui s'évacue à l'extrémité opposée du tube.

A la sortie de la bobine de blocage 12, le fil torsadé est envoyé à une bobine réceptrice, non représentée.

Une machine de ce genre permet de torsader le brin à base d'un alliage niobium-titane jusqu'à un pas relatif de torsadage de 4 ou 5 diamètres, pour lequel la diminution de l'intensité critique n'est que de 5% environ.

Bien que le chauffage du brin en cours de torsadage s'effectue dans la machine qui vient d'être décrit par circulation au contact du brin d'un courant de gaz chaud, on comprendra que l'on peut l'effectuer également par d'autres moyens, notamment par induction ou par rayonnement infrarouge.

L'invention s'applique au torsadage de brins multifilamentaires en d'autres matériaux à propriété supraconductrices que les alliages niobium-titane, notamment à ceux en alliages niobium-étain.

## Revendications

1. Procédé de torsadage de brins multifilamentaires supraconducteurs de diamètre inférieur à 1 mm, susceptibles de fonctionner en régime alternatif, caractérisé en ce que l'on torsade les brins à un pas compris entre 7 diamètres et 3 diamètres, à une température supérieure à 200°C et à une vitesse entre 30 tours/min et 5000 tours/ min.

2. Procédé selon la revendication 1, pour le torsadage de brins à filaments de niobium-titane, caractérisé en ce que l'on effectue le chauffage du brin en cours de torsadage par circulation à son contact d'un courant de gaz chaud non réactif sur le filament.

3. Procédé selon la revendication 1, pour le torsadage de brins à filaments de niobium-titane, caractérisé en ce que la température de torsadage est inférieure à 500°C.

4. Procédé selon la revendication 3, pour le torsadage de brins à filaments en niobium-titane de diamètre 0,12 mm, caractérisé en ce que l'on effectue le torsadage à une température de 250°C.

5. Dispositif de torsadage par le procédé selon la revendication 1, comprenant une bobine (5) débitrice du brin (7) à torsader, une bobine réceptrice du brin torsadé, des moyens pour faire tourner la bobine débitrice autour d'un axe (3) perpendiculaire à son axe propre (6), formant axe d'avance du brin, et des moyens pour tirer le brin selon cet axe d'avance, et en outre un tube (11) de guidage du brin sortant de la bobine débitrice caractérisé par des moyens pour mettre en circulation dans ce tube un courant de gaz chaud non réactif sur le brin.

## Patentansprüche

1. Verfahren zum Verdrillen mehradriger supraleitender Litzen mit einem Durchmesser unter 1 mm, die mit Wechselstrom arbeiten, dadurch gekennzeichnet, dass die Litzen mit einer Schrittlänge zwischen 7 und 3 Durchmessern bei einer Temperatur von mindestens 200°C und einer Geschwindigkeit zwischen 30 und 5000 Umdrehungen pro Minute verdrillt werden.

2. Verfahren nach Anspruch 1 zur Verdrillung von Litzen aus Niobium-Tantalfasern, dadurch gekennzeichnet, dass die Beheizung der Litze während der Verdrillung mittels kontaktierenden Umfliessens der Adern durch einen Strom nichtreaktiven Gases erfolgt.

3. Verfahren nach Anspruch 1 zur Verdrillung von Litzen aus Niobium-Tantaladern, dadurch gekennzeichnet, dass die Verdrillungstemperatur niedriger als 500°C ist.

4. Verfahren nach Anspruch 3 zur Verdrillung von Litzen aus Niobium-Tantaladern von 0,12 mm Durchmesser, dadurch gekennzeichnet, dass die Verdrillung bei einer Temperatur von 250°C erfolgt.

5. Vorrichtung zur Verdrillung nach dem Verfahren gemäss Anspruch 1, mit einer Abwickelspule (5) für die zu verdrillende Litze (7), einer Aufwickelspule für die verdrillte Litze, Mitteln, um die Abwickelspule um eine zu ihrer eigenen Achse (6) senkrechte Achse (3), welche die Vorschubachse der Litze darstellt, in Drehung zu versetzen, mit Mitteln, um die Litze in Richtung dieser Vorschubachse zu ziehen, und weiter einem Führungsrohr (11) für die die Abwickelspule verlassende Litze, gekennzeichnet durch Mittel, die einen Strom heissen, nichtreaktiven Gases im Führungsrohr um die Litze fliessen lassen.

## Claims

1. A method of twisting multifilament superconductor strands having a diameter of less than 1 mm and adapted to carry alternating current, characterized in that the strands are twisted to a pitch in the range of 7 to 3 diameters, at a temperature of at least 200°C and a speed of between 30 and 5000 rpm.

2. A method according to claim 1 for twisting niobium-titanium filament strands, characterized in that the strand is heated during the twisting process by contact with a flow of hot gas which does not react with the filament.

3. A method according to claim 1 for twisting niobium-titanium filament strands, characterized in that the temperature applied during twisting is less than 500°C.

4. A method according to claim 3 for twisting niobium-titanium filament strands of 0,12 mm diameter, characterized in that the twisting is done at a temperature of 250°C.

5. A twisting device for implementing the method according to claim 1, comprising a payout reel (5) for the strand (7) to be twisted and a takeup reel for the twisted strand, means for rotating the payout reel about an axis (3) perpendicular to its own axis (6) and being the same as the strand feed axis, and means for pulling the strand along this feed axis, and a tube (11) for guiding the strand leaving the payout reel, characterized by means for impelling about the strand and through this guide tube a stream of a hot gas not being reactive.